# EUROPÄISCHE PATENTSCHRIFT

(11) **EP 2 387 524 B1**
(45) Veröffentlichungstag und Bekanntmachung des Hinweises auf die Patenterteilung: **14.11.2012**
(21) Anmeldenummer: 09805702.9
(22) Anmeldetag: 17.12.2009
(51) Int. Cl.: B60W 10/08, B60W 30/18, B60W 10/26, B60L 7/16, B60L 11/18, B60L 11/00

(54) **Bordnetz und Spannungswandler für ein Fahrzeug und Verfahren zum Antreiben eines Mehrspannungsbordnetzes**
Onboard network and voltage transformer for a vehicle and method for controlling a multi-voltage on-board network
Réseau de bord et transformateur de tension pour un véhicule et procédé pour commander un réseau de bord à tension multiple

(30) Priorität: 14.01.2009 DE 102009000222
(43) Veröffentlichungstag der Anmeldung: 23.11.2011
(73) Patentinhaber: Robert Bosch GmbH, 70442 Stuttgart (DE)
(72) Erfinder: MUELLER, Wolfgang, 70439 Stuttgart (DE); PRAG, Christian, 70469 Stuttgart (DE)
(86) Internationale Anmeldenummer: PCT/EP2009/067433
(87) Internationale Veröffentlichungsnummer: WO 2010/081611

(56) Entgegenhaltungen:
- DE-A1- 10 042 532
- DE-A1- 10 047 932
- DE-A1- 10 330 703

## Beschreibung

### Stand der Technik

Die Erfindung betrifft ein Bordnetz für ein Fahrzeug, insbesondere Kraftfahrzeug. Das Bordnetz weist eine mindestens zum Generatorbetrieb ausgebildete elektrische Maschine auf. Das Bordnetz weist auch einen eingangsseitig mit der elektrischen Maschine mindestens mittelbar verbundenen Spannungswandler und einen ausgangsseitig mit dem Spannungswandler verbundenen ersten Energiespeicher, insbesondere einen Akkumulator auf.

Aus der DE 103 30 703 A1 der Anmelderin ist ein Mehrspannungs-Bordnetz mit einem Mehrspannungs-Generator-Elektromotor bekannt, bei dem während eines Generatorbetriebs elektrische Energie erzeugt werden kann und in ein Teilnetz zum Versorgen eines Verbrauchers eingespeist werden kann. Das Mehrspannungs-Bordnetz weist auch ein zweites Teilnetz auf, wobei ein zweiter Verbraucher mit dem zweiten Teilnetz verbunden ist.

Die DE 103 30 703 A1 offenbart die Merkmale des Obergriffs des Anspruchs 1 und des Obergriffs des Anspruchs 5.

### Offenbarung der Erfindung

Erfindungsgemäß ist die elektrische Maschine zum Rekuperationsbetrieb ausgebildet. Der Spannungswandler ist ausgebildet, einen Ladezustand des ersten Energiespeichers zu erfassen oder zu begrenzen und den Ladezustand des ersten Energiespeichers derart zu regeln, dass der erste Energiespeicher während eines Generatorbetriebs, bevorzugt beim energieverbrauchenden Fahren des Fahrzeugs, eine Reservekapazität aufweist. Der Spannungswandler ist weiter ausgebildet, in Abhängigkeit eines eingangsseitig empfangenen, einen Rekuperationsbetrieb des Fahrzeugs repräsentierenden Rekuperationssignals die Reservekapazität des ersten Energiespeichers zu laden.

Der erste Energiespeicher ist bevorzugt ein Akkumulator, insbesondere Starterbatterie oder Batterie eines Antriebs zum Fortbewegen des Fahrzeugs.

Durch das Bordnetz der vorbezeichneten Art kann vorteilhaft bei einem Kraftfahrzeug Energie eingespart werden. Während herkömmliche Spannungswandler, insbesondere Laderegler zum Laden eines Akkumulators, insbesondere Starterbatterie, eines Kraftfahrzeugs den Akkumulator so lange Aufladen, bis der Akkumulator vollgeladen ist und - insbesondere mittels eines Begrenzens einer Ausgangsspannung - verhindern, dass der Akkumulator überladen werden kann, wird bei dem Bordnetz der vorbezeichneten Art vorteilhaft eine Reservekapazität in dem Akkumulator zurückbehalten, welche erst dann aufgeladen werden kann, wenn die von der elektrischen Maschine, insbesondere einem Generator oder einer als Antriebsmotor und Generator ausgebildeten elektrischen Maschine, erzeugte elektrische Energie während eines Rekuperationsbetriebs, - beispielsweise beim Abbremsen des Fahrzeugs - erzeugt wird. Die Energie beim Abbremsen des Fahrzeugs würde ansonsten - bei voll geladenem Akkumulator - mittels der Bremsen des Fahrzeugs oder des Antriebsmotors in Verlustwärme umgesetzt werden. Die in der Reservekapazität gespeicherte Energie kann dann vorteilhaft zum Betreiben von elektrischen Verbrauchern oder zum Starten des Fahrzeugs verwendet werden. Das Bordnetz der vorbezeichneten Art kann somit - wenn serienmäßig bei vielen Fahrzeugen eingesetzt - wirksam zu einem verbesserten Umweltschutz beitragen.

In einer vorteilhaften Ausführungsform des Bordnetzes weist das Bordnetz einen zweiten Energiespeicher auf, insbesondere einen Kondensator, bevorzugt Doppelschichtkondensator. Der zweite Energiespeicher ist mit der elektrischen Maschine verbunden und ausgebildet, von elektrischen Maschine in einem Generatorbetrieb und/oder Rekuperationsbetrieb erzeugte elektrische Ladung zu speichern. Der Spannungswandler ist in dieser Ausführungsform ausgebildet, den Ladezustand des zweiten Energiespeichers zu erfassen und in Abhängigkeit des Ladezustandes des zweiten Energiespeichers, insbesondere einer Spannung, die Reservekapazität zu laden. Dadurch kann vorteilhaft - insbesondere in einer Ausführungsform des Bordnetzes als Mehrspannungs-Bordnetz - die Reservekapazität dann geladen werden, wenn der zweite Energiespeicher, insbesondere der Doppelschichtkondensator, voll geladen ist. Weiter vorteilhaft kann das Bordnetz ausgebildet sein, wenigstens einen elektrischen Verbraucher des Fahrzeugs wahlweise aus dem ersten Energiespeicher, oder dem zweiten Energiespeicher mit elektrischer Energie zu versorgen. So kann vorteilhaft eine beim Rekuperieren erzeugte elektrische Energie zwei Verbrauchern zur Verfügung gestellt werden, welche jeweils mit zueinander verschiedener Betriebsspannung betrieben werden können. So kann beispielsweise der zweite Energiespeicher, insbesondere der Doppelschichtkondensator, mit einer Spannung geladen werden, welche größer ist als die Spannung des ersten Energiespeichers. Weiter vorteilhaft kann das Bordnetz so zwei Teilnetze mit zueinander verschiedener Bordspannung aufweisen.

Beispielsweise kann der zweite Energiespeicher eine derartige Kapazität für elektrische Ladung aufweisen, dass ein Fahrzeug mit der in dem zweiten Energiespeicher vorrätiggehaltenen elektrischen Energie gestartet - beispielsweise ein Verbrennungsmotor des Fahrzeugs mittels eines Anlassers gestartet - oder gefahren werden kann - beispielsweise ein Elektrofahrzeug oder Hybridfahrzeug mit einem zusätzlichen Elektromotor -.

In einer bevorzugten Ausführungsform ist der Spannungswandler ausgebildet, eine ausgangsseitig erzeugte Ladespannung zum Laden des ersten Energiespeichers in Abhängigkeit von dem Rekuperationssignal zu ändern. Der Spannungswandler kann so vorteilhaft die Reservekapazität erzeugen. Bevorzugt ist der Spannungswandler ausgebildet, in Abhängigkeit des Rekuperationssignals eine im Vergleich zum Generatorbetrieb vergrößerte Ladespannung zu erzeugen, und die Reservekapazität mit der vergrößerten Ladespannung zu laden. Beispielsweise beträgt eine Spannung während eines Generatorbetriebs - wenn beispielsweise das Fahrzeug beschleunigt oder mit gleichbleibender Geschwindigkeit fährt - zwischen 12 und 14 V. Die vergrößerte Ladespannung kann dann beispielsweise mehr als 14 V, bevorzugt zwischen 14,5 und 15 V betragen.

Der zweite Energiespeicher ist bevorzugt ein Doppelschichtkondensator, Super-Kondensator oder Supercap. Der erste Energiespeicher ist bevorzugt ein Blei-Akkumulator, insbesondere Blei-Gel-Akkumulator. Weitere beispielhafte Ausführungsformen für den ersten Energiespeicher sind ein Nickel-Kadmium-Akkumulator, ein Nickel-Metall-Hydrid-Akkumulator, ein Natrium-Schwefel-Akkumulator ein Lithium-Ionen-Akkumulator oder ein Lithium-Polymer-Akkumulator.

Die Erfindung betrifft auch einen Spannungswandler für ein Kraftfahrzeug. Der Spannungswandler weist einen Ausgang zum Anschließen eines Akkumulators auf und einen Eingang für eine Versorgungsspannung. Der Spannungswandler ist bevorzugt zum eingangsseitigen Verbinden mit einer Versorgungsspannung eines Generators und/oder eines Kondensators, insbesondere eines Doppelschichtkondensators ausgebildet. Der Spannungswandler ist ausgebildet, mittels der Versorgungsspannung den Akkumulator derart zu laden, dass der Akkumulator nicht überladen werden kann. Der Spannungswandler weist auch einen Eingang für ein Rekuperationssignal auf, wobei der Spannungswandler ausgebildet ist, den Akkumulator mit einer Ladespannung zu laden und in Abhängigkeit eines eingangsseitig empfangenen Rekuperationsignals eine im Vergleich zu der Ladespannung vergrößerten Ladespannung zu erzeugen und den Akkumulator mit der vergrößerten Ladespannung zu laden. Weiter bevorzugt ist der Spannungswandler ausgebildet, die vergrößerte Ladespannung - unabhängig oder zusätzlich zu dem Rekuperationssignal - in Abhängigkeit von einer eingangsseitig empfangenen Spannung, insbesondere einer Spannung eines eingangsseitig angeschlossenen Kondensators, insbesondere Doppelkondensators zu erzeugen. Dadurch kann vorteilhaft eine Reservekapazität des Akkumulators gebildet sein, welche in Abhängigkeit des Rekuperationssignals geladen werden kann.

Die Erfindung betrifft auch ein Verfahren zum Betreiben eines Bordnetzes, bevorzugt Mehrspannungsbordnetz eines Fahrzeugs, insbesondere Kraftfahrzeugs. Bei dem Verfahren wird ein Ladezustand eines ersten Energiespeichers erfasst und/oder begrenzt. Weiter wird der Ladezustand des ersten Energiespeichers derart geregelt, dass der erste Energiespeicher während eines Generatorbetriebs, insbesondere beim Fahren des Fahrzeugs, eine Reservekapazität aufweist, und in Abhängigkeit eines Rekuperationsbetriebs des Fahrzeugs die Reservekapazität des ersten Energiespeichers geladen wird. Weiter bevorzugt wird ein Ladezustand, insbesondere eine Spannung, eines zweiten Energiespeichers erfasst, und in Abhängigkeit des Ladezustandes des zweiten Energiespeichers die Reservekapazität geladen. Weiter bevorzugt wird bei dem Verfahren die Reservekapazität geladen, wenn der zweite Energiespeicher vollgeladen ist. Dadurch kann vorteilhaft eine Rekuperationsenergie vorrangig in dem zweiten Energiespeicher vorrätiggehalten sein. Die Reservekapazität des ersten Energiespeichers wird erst dann genutzt, wenn der zweite Energiespeicher vollgeladen ist. Der zweite Energiespeicher kann bevorzugt schneller, insbesondere mit einem größeren Strom geladen werden als der erste Energiespeicher. Dadurch kann die Rekuperationsenergie vorteilhaft schneller und effizienter gespeichert werden.

Die Erfindung wird nun im Folgenden anhand von Figuren und weiteren Ausführungsbeispielen beschrieben.
Figur 1 zeigt schematisch ein Ausführungsbeispiel für eine Bordnetz für ein Kraftfahrzeug, welches als Mehrspannung-Bordnetz ausgebildet ist;
Figur 2 zeigt schematisch ein Ausführungsbeispiel für ein Verfahren zum Betreiben eines Mehrspannungs-Bordnetzes eines Kraftfahrzeugs, bei dem vorteilhaft Energie eingespart werden kann.

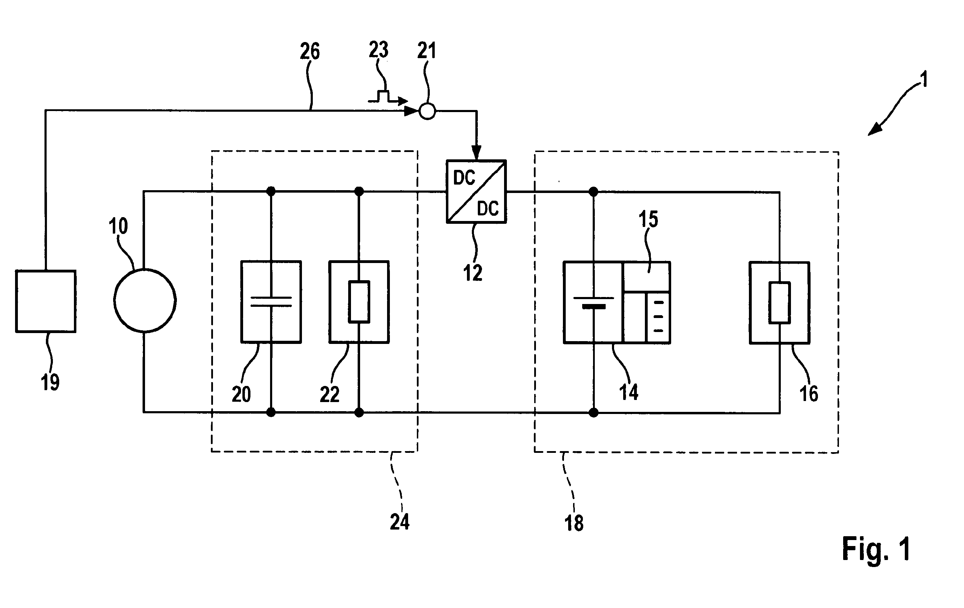

Figur 1 zeigt - schematisch - ein Ausführungsbeispiel für ein Bordnetz 1 eines Fahrzeugs, insbesondere Kraftfahrzeugs, Transportfahrzeugs oder Gabelstaplers. Das Bordnetz 1 weist zwei Teilnetze, nämlich ein Teilnetz 18 und ein Teilnetz 24 auf. Das Bordnetz 1 weist auch einen Spannungswandler 12 auf. Der Spannungswandler 12 ist eingangsseitig mit dem Teilnetz 24 verbunden. Das Teilnetz 24 weist einen Energiespeicher 20 auf, welche in diesem Ausführungsbeispiel als Doppeischichtkondensator ausgebildet ist. Das Teilnetz 24 weist auch einen Lastwiderstand 22 auf, welcher beispielsweise durch wenigstens einen, bevorzugt eine Mehrzahl von elektrischen Verbrauchern des Kraftfahrzeugs gebildet sein kann.

Der Spannungswandler 12 ist eingangsseitig auch mit einem Generator 10 verbunden. Der Generator 10 ist in diesem Ausführungsbeispiel ausgebildet, in Abhängigkeit von einer Drehbewegung eines Motors des Fahrzeugs 1 eine elektrische Energie zu erzeugen und ausgangsseitig in das Teilnetz 24 einzuspeisen.

Der Spannungswandler 12 ist ausgangsseitig mit einem Teilnetz 18 verbunden. Das Teilnetz 18 weist einen Akkumulator 14 und einen Lastwiderstand 16 auf. Der Lastwiderstand 16 ist beispielsweise durch wenigstens einen elektrischen Verbraucher, bevorzugt eine Mehrzahl von elektrischen Verbrauchern des Kraftfahrzeugs gebildet. Der Spannungswandler 12 ist ausgebildet, eine eingangsseitig empfangene Gleichspannung, beispielsweise eine Gleichspannung mit der das Teilnetz 24 betrieben wird, beispielsweise zwischen 14 und 42 V, zu empfangen und eine Ausgangsspannung zu erzeugen, welche von der eingangsseitig empfangenen Spannung verschieden ist. Der Spannungswandler 12 ist in diesem Ausführungsbeispiel ausgebildet, die Ausgangsspannung in Abhängigkeit der eingangsseitig empfangenen Spannung zu erzeugen. Die eingangsseitig empfangene Spannung spiegelt in diesem Ausführungsbeispiel einen Ladezustand des zweiten Energiespeichers 20 wider. Der Spannungswandler 12 ist in diesem Ausführungsbeispiel ausgebildet, eine Ausgangsspannung zu erzeugen, welche kleiner ist als die eingangsseitig empfangene Spannung. Der Spannungswandler 12 ist dies in diesem Ausführungsbeispiel auch ausgebildet, einen Ladezustand des ersten Energiespeichers 14 derart zu regeln, dass der erste Energiespeicher während eines Generatorbetriebs des Generators 10, insbesondere beim energieverbrauchenden Fahren des Fahrzeugs, eine Reservekapazität aufweist.

Der Spannungswandler 12 weist auch einen Eingang 21 für ein Rekuperationssignal 23 auf. Der Spannungswandler 12 ist mit dem Eingang 21 über eine Verbindungsleitung 26 mit einer Steuereinheit 19 des Bordnetzes 1 verbunden. Die Steuereinheit 19 ist ausgebildet, im Falle eines Rekuperationsbetriebs des Fahrzeugs ein Rekuperationssignal 23 zu erzeugen und dieses ausgangsseitig über die Verbindungsleitung 26 auszugeben.

Der Spannungswandler 12 ist ausgebildet, in Abhängigkeit des eingangsseitig empfangenen Rekuperationssignals 23 die zuvor erzeugte Reservekapazität 15 des Akkumulators 14 mit elektrischer Ladung aufzufüllen. Der Spannungswandler 12 ist dazu ausgebildet, die ausgangsseitig erzeugte Spannung in Abhängigkeit des eingangsseitig empfangenen Rekuperationssignals 23 - im Vergleich zu einer während des energieverbrauchenden Betriebs des Fahrzeugs erzeugten Spannung - zu erhöhen.

Der Akkumulator 14 wird dann mit der erhöhten Spannung, so beispielsweise mit 14,8 Volt anstatt 14 Volt geladen, so dass die Reservekapazität 15 aufgefüllt werden kann. Beispielsweise umfasst der Akkumulator, insbesondere Bleiakkumulator 6 galvanische Zellen. In einer anderen Ausführungsform umfasst der Akkumulator 12 galvanische Zellen. Der Akkumulator kann dann mit einer erhöhten Spannung von 29,2 Volt anstatt 28 Volt geladen werden.

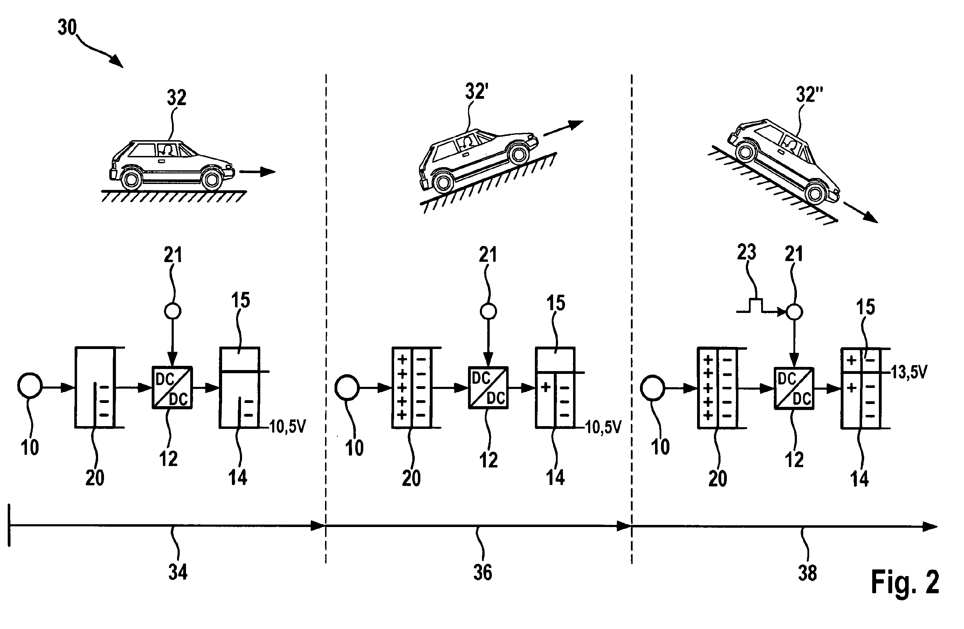

Figur 2 zeigt ein Ausführungsbeispiel für ein Verfahren 30 zum Betreiben eines Bordnetzes eines Kraftfahrzeugs, beispielsweise das in Figur 1 bereits dargestellte Bordnetz 1. Bei dem Verfahren 30 wird in einem Verfahrensschritt 34 von einem Generator 10 - beispielsweise der in Figur 1 dargestellte Generator 10 - eines Fahrzeugs 32 erzeugte elektrische Energie mittels eines zweiten Energiespeichers 20 des Fahrzeugs 32, beispielsweise eines Doppelschichtkondensators, zwischengespeichert und zum Betreiben eines Teilnetzes des Fahrzeugs 32, welches beispielsweise eine Versorgungsspannung zwischen 14 und 42 V aufweist, von dem zweiten Energiespeicher 20 zur Verfügung gestellt. Der zweite Energiespeicher 20 ist in diesem Verfahrensschritt noch nicht vollgeladen. Der zweite Energiespeicher 20 ist mit dem in Figur 1 bereits dargestellten Spannungswandler 12 verbunden.

Der Spannungswandler 12 ist ausgangsseitig mit einem ersten Energiespeicher 14 verbunden. Der erste Energiespeicher 14 ist beispielsweise ein Akkumulator, insbesondere ein Blei-Akkumulator des Kraftfahrzeugs 32, wobei der Bleiakkumulator 6 galvanische Zellen umfasst. Der Spannungswandler 12 ist ausgebildet, den ersten Energiespeicher 14 im Falle eines energieverbrauchenden Betriebs des Fahrzeugs 32 mit einer vorbestimmten Spannung, beispielsweise zwischen 13,5 Volt und 14 Volt, nur teilweise zu laden, so dass der erste Energiespeicher 14 eine Reservekapazität 15 aufweist. Dargestellt ist der erste Energiespeicher als Bleiakkumulator, welcher bi 10,5 Volt entladen ist und dessen Reservekapazität bei einer Spannung von 13,5 Volt beginnt.

Das Verfahren 30 zeigt auch einen Verfahrensschritt 36. Bei dem Verfahrensschritt 36 fährt das Fahrzeug 32, in diesem Verfahrensschritt als Fahrzeug 32' dargestellt, weiter, beispielsweise bergauf und verbraucht dabei Energie, beispielsweise Benzin, Diesel, Gas oder Wasserstoff. Der Generator 10 lädt während dieses energieverbrauchenden Betriebs den zweiten Energiespeicher 20 weiter auf, bis der zweite Energiespeicher 20 voll geladen ist und im vollgeladenen Zustand eine vorbestimmte Ladespannung, beispielsweise 42 V aufweist.

Das Verfahren 30 zeigt auch einen Verfahrensschritt 38. Bei dem Verfahrensschrittes 38 fährt das Fahrzeug 32 - in diesem Verfahrensschritt als Fahrzeug 32" dargestellt, bergab und kann während des Bergabfahrens eine Rekuperationsenergie mittels des Generators 10 erzeugen. Der zweite Energiespeicher 20 ist in diesem Ausführungsbeispiel bereits vollgeladen und kann eine weitere elektrischer Energie nicht mehr aufnehmen. Der Spannungswandler 12 kann nun in Abhängigkeit eines eingangsseitig am Eingang 21 empfangenen Rekuperationssignals 23 den Reservespeicher 15 laden, so dass die Rekuperationsenergie in dem Reservespeicher 15 gespeichert werden kann. Der Spannungswandler 12 kann dazu beispielsweise ausgangsseitig eine Spannung von 14,8 V erzeugen.

Die in dem Reserve Speicher 15 so gespeicherte Rekuperationsenergie kann nun weiter zum Betreiben von elektrischen Verbrauchern des Fahrzeugs 32 verwendet werden.

Anders als im Verfahrensschritt 36 dargestellt, kann der zweite Energiespeicher 20 während eines Rekuperationsbetriebs geladen werden. Zusätzlich zu dem bereits dargestellten Spannungswandler 12 kann das Bordnetz des Fahrzeugs 32 einen weiteren Spannungswandler aufweisen, welcher zwischen dem zweiten Energiespeicher und dem Generator 10 angeordnet ist. Der zweite Spannungswandler kann ausgebildet sein, beispielsweise mittels Änderung einer Ladespannung in dem zweiten Energiespeicher eine weitere Reservekapazität bereitzuhalten, und die weitere Reservekapazität in Abhängigkeit von dem Rekuperationssignal 23 zu laden.

Mittels des so ausgebildeten Spannungswandlers 12 kann vorteilhaft Energie eingespart werden, so dass die Umwelt auf diese Weise vorteilhaft - insbesondere durch ein verringertes Erzeugen von Treibhausgasen - entlastet werden kann.

## Patentansprüche

1. Bordnetz (1) für ein Fahrzeug (32),
mit einer mindestens zum Generatorbetrieb ausgebildeten elektrischen Maschine (10), und einem eingangsseitig mit der elektrischen Maschine (10) mindestens mittelbar verbundenen Spannungswandler (12), und einem ausgangsseitig mit dem Spannungswandler (12) verbundenen ersten Energiespeicher (14), insbesondere einem Akkumulator, wobei
die elektrische Maschine (10) zum Rekuperationsbetrieb (38) ausgebildet ist und der Spannungswandler (12) ausgebildet ist, einen Ladezustand des ersten Energiespeichers (14) zu erfassen oder zu begrenzen, **dadurch gekennzeichnet, dass** der Spannungswandler (12) ausgebildet ist, den Ladezustand des ersten Energiespeichers (14) derart zu regeln, dass der erste Energiespeicher (14) während eines Generatorbetriebs (34, 36), insbesondere beim Fahren des Fahrzeugs, eine Reservekapazität (15) aufweist, und in Abhängigkeit eines eingangsseitig empfangenen, einen Rekuperationsbetrieb (38) des Fahrzeugs (32) repräsentierenden Rekuperationssignals (23) die Reservekapazität (15) des ersten Energiespeichers (14) zu laden.

2. Bordnetz (1) nach Anspruch 1,
**dadurch gekennzeichnet, dass**, dass
das Bordnetz (1) einen zweiten Energiespeicher (20), insbesondere Doppelschichtkondensator aufweist, welcher mit der elektrischen Maschine (10) verbunden und ausgebildet ist, von der elektrischen Maschine (10) in einem Generatorbetrieb (34, 36) und/oder Rekuperationsbetrieb (38) erzeugte elektrische Ladung zu speichern,
wobei der Spannungswandler (12) ausgebildet ist, den Ladezustand des zweiten Energiespeichers (20) zu erfassen und in Abhängigkeit des Ladezustandes des zweiten Energiespeichers (20), insbesondere einer Spannung, die Reservekapazität (15) zu laden.

3. Bordnetz (1) nach Anspruch 1 oder 2,
**dadurch gekennzeichnet, dass**, dass
der Spannungswandler (12) ausgebildet ist, eine ausgangsseitig erzeugte Ladespannung zum Laden des ersten Energiespeichers in Abhängigkeit von dem Rekuperationssignal (23) zu ändern.

4. Bordnetz (1) nach Anspruch 3,
**dadurch gekennzeichnet, dass**, dass
der Spannungswandler (12) ausgebildet ist, in Abhängigkeit des Rekuperationssignals (23) eine im Vergleich zum Generatorbetrieb vergrößerte Ladespannung zu erzeugen, und die Reservekapazität (15) mit der vergrößerten Ladespannung zu laden.

5. Spannungswandler (12) für ein Kraftfahrzeug,
mit einem Ausgang zum Anschließen eines Akkumulators und mit einem Eingang für eine Versorgungsspannung, wobei der Spannungswandler ausgebildet ist, mittels der Versorgungsspannung den Akkumulator (14) derart zu laden, dass der Akkumulator (14) nicht überladen werden kann, wobei der Spannungswandler (12) einen Eingang (21) für ein Rekuperationssignal (23) aufweist, **dadurch gekennzeichnet, dass** der Spannungswandler (12) ausgebildet ist, den Akkumulator (14) mit einer Ladespannung zu laden, und in Abhängigkeit des eingangsseitig empfangenen Rekuperationssignals (23) eine im Vergleich zur Ladespannung vergrößerte Ladespannung zu erzeugen und den Akkumulator mit der vergrößerten Ladespannung zu laden, so dass eine Reservekapazität (15) des Akkumulators (15) gebildet ist, welche in Abhängigkeit des Rekuperationssignals (23) geladen werden kann.

6. Verfahren (30) zum Betreiben eines Mehrspannungsbordnetzes (1) eines Fahrzeugs (32),
bei dem
ein Ladezustand eines ersten Energiespeichers (14) erfasst wird und der Ladezustand des ersten Energiespeichers (14) derart geregelt wird, dass der erste Energiespeicher (14) während eines Generatorbetriebs (34, 36), insbesondere beim Fahren des Fahrzeugs, eine Reservekapazität (15) aufweist, und in Abhängigkeit eines Rekuperationsbetriebs (38) des Fahrzeugs (32") die Reservekapazität (15) des ersten Energiespeichers (14) geladen wird.

7. Verfahren (30) nach Anspruch 6, bei dem
ein Ladezustand eines zweiten Energiespeichers (20), insbesondere Doppelschichtkondensator, erfasst wird, und in Abhängigkeit des Ladezustandes des zweiten Energiespeichers (20), insbesondere einer Spannung, die Reservekapazität (15) geladen wird.

8. Verfahren (30) nach Anspruch 7, bei dem die Reservekapazität (15) geladen wird, wenn der zweite Energiespeicher (20) vollgeladen ist.

## Claims

1. On-board power system (1) for a vehicle (32),
having an electric machine (10) which is designed at least for generator mode, and a voltage transformer (12) which is at least indirectly connected on the input side to the electric machine (10), and a first energy store (14), in particular an accumulator, which is connected on the output side to the voltage transformer (12), wherein the electric machine (10) is designed for regenerative operation (38), and the voltage transformer (12) is designed to detect or limit a charge state of the first energy store (14), **characterized in that** the voltage transformer (12) is designed to regulate the charge state for the first energy store (14) in such a way that the first energy store (14) has a reserve capacitance (15) during a generator operation (34, 36), in particular when the vehicle is driving, and to charge the reserve capacitance (15) of the first energy store (14) as a function of a regeneration signal (23) which is received on the input side and which represents a regeneration operation (38) of the vehicle (32).

2. On-board power system (1) according to Claim 1,
**characterized in that**
the on-board power system (1) has a second energy store (20), in particular a double-layer capacitor which is connected to the electric machine (10) and is designed to store electrical charge which is generated by the electric machine (10) in a generator operation (34, 36) and/or regeneration operation (38),
wherein the voltage transformer (12) is designed to detect the charge state of the second energy store (20) and to charge the reserve capacitance (15) as a function of the charge state of the second energy store (20), in particular of a voltage.

3. On-board power system (1) according to Claim 1 or 2,
**characterized in that**
the voltage transformer (12) is designed to change a charge voltage generated on the output side, for the purpose of charging the first energy store as a function of the regeneration signal (23).

4. On-board power system (1) according to Claim 3,
**characterized in that**
the voltage transformer (12) is designed to generate a charge voltage, which is increased in comparison with the generator operation, as a function of the regeneration signal (23), and to charge the reserve capacitance (15) with the increased charge voltage.

5. Voltage transformer (12) for a motor vehicle, having an output for connecting an accumulator and having an input for a supply voltage, wherein the voltage transformer is designed to charge the accumulator (14) by means of the supply voltage in such a way that the accumulator (14) cannot be overcharged, wherein the voltage transformer (12) has an input (21) for a regeneration signal (23), **characterized in that** the voltage transformer (12) is designed to charge the accumulator (14) with a charge voltage, and to generate a charge voltage, which is increased in comparison with the charge voltage, as a function of the regeneration signal (23) received on the input side, and to charge the accumulator with the increased charge voltage, with the result that a reserve capacitance (15) of the accumulator (14) is formed, which reserve capacitance (15) can be charged as a function of the regeneration signal (23).

6. Method (30) for operating a multi-voltage on-board power system (1) of a motor vehicle (32),
in which
a charge state of a first energy store (14) is detected, and the charge state of the first energy store (14) is regulated in such a way that the first energy store (14) has a reserve capacitance (15) during a generator operation (34, 36), in particular when the vehicle is being driven, and the reserve capacitance (15) of the first energy store (14) is charged as a function of a regeneration operation (38) of the vehicle (32").

7. Method (30) according to Claim 6, in which
a charge state of a second energy store (20), in particular a double-layer capacitor, is detected, and the reserve capacitance (15) is charged as a function of the charge state of the second energy store (20), in particular a voltage.

8. Method (30) according to Claim 7, in which the reserve capacitance (15) is charged when the second energy store (20) is fully charged.

## Revendications

1. Réseau de bord (1) pour un véhicule (32), présentant :
au moins une machine électrique (10) configurée pour fonctionner en génératrice,
un convertisseur de tension (12) dont l'entrée est reliée au moins indirectement à la machine électrique (10) et
une première réserve d'énergie (14), en particulier un accumulateur, dont l'entrée est reliée au convertisseur de tension (12),
la machine électrique (10) étant configurée pour fonctionner en récupération (38) et le convertisseur de tension (12) étant configuré pour détecter ou limiter l'état de charge de la première réserve d'énergie (14), **caractérisé en ce que**
le convertisseur de tension (12) est configuré
pour réguler l'état de charge de la première réserve d'énergie (14) de telle sorte que la première réserve d'énergie (14) présente une capacité de réserve (15) pendant un fonctionnement en génératrice (34, 36) et en particulier lorsque le véhicule roule et
pour charger la capacité de réserve (15) de la première réserve d'énergie (14) en fonction d'un signal de récupération (23) reçu de l'entrée et indiquant que le véhicule (32) fonctionne en récupération (38).

2. Réseau de bord (1) selon la revendication 1, **caractérisé en ce que** le réseau de bord (1) présente une deuxième réserve d'énergie (20), en particulier un condensateur à double couche, qui est reliée à la machine électrique (10) et est configurée pour accumuler une charge électrique délivrée par la machine électrique (10) fonctionnant en génératrice (34, 36) et/ou fonctionnant en récupération (38),
le convertisseur de tension (12) étant configuré pour saisir l'état de charge de la deuxième réserve d'énergie (20) et pour charger la capacité de réserve (15) en fonction de l'état de charge de la deuxième réserve d'énergie (20) et en particulier de sa tension.

3. Réseau de bord (1) selon les revendications 1 ou 2, **caractérisé en ce que** le convertisseur de tension (12) est configuré pour modifier la tension de charge produite à l'entrée en vue de charger la première réserve d'énergie en fonction du signal de récupération (23).

4. Réseau de bord (1) selon la revendication 3, **caractérisé en ce que** le convertisseur de tension (12) est configuré pour délivrer en fonction du signal de récupération (23) une tension de charge plus grande que celle du fonctionnement en génératrice et pour charger la capacité de réserve (15) à une tension de charge plus élevée.

5. Convertisseur de tension (12) pour véhicule automobile, présentant :
une sortie destinée à être raccordée à un accumulateur et une entrée pour une tension d'alimentation,
le convertisseur de tension étant configuré pour charger l'accumulateur (14) au moyen de la tension d'alimentation de telle sorte que l'accumulateur (14) ne puisse être surchargé,
le convertisseur de tension (12) présentant une entrée (21) pour un signal de récupération (23), **caractérisé en ce que**
le convertisseur de tension (12) est configuré pour
charger l'accumulateur (14) à une tension de charge et pour délivrer en fonction du signal de récupération (23) reçu à l'entrée une tension de charge plus grande que la tension de charge et
pour charger l'accumulateur à la tension de charge plus élevée de manière à former une capacité de réserve (15) de l'accumulateur (14) qui peut être chargée en fonction du signal de récupération (23).

6. Procédé (30) de gestion d'un réseau de bord (1) multi-tension d'un véhicule (32), dans lequel :
l'état de charge d'une première réserve d'énergie (14) est saisi et l'état de charge de la première réserve d'énergie (14) est régulé de telle sorte que la première réserve d'énergie (14) présente une capacité de réserve (15) pendant un fonctionnement en génératrice (34, 36), en particulier lorsque le véhicule roule, et que la capacité de réserve (15) de la première réserve d'énergie (14) soit chargée en fonction d'un fonctionnement en récupération (38) du véhicule (32'').

7. Procédé (30) selon la revendication 6, dans lequel l'état de charge d'une deuxième réserve d'énergie (20), en particulier d'un condensateur à double couche, est saisi et dans lequel la capacité de réserve (15) est chargée en fonction de l'état de charge de la deuxième réserve d'énergie (20) et en particulier de sa tension.

8. Procédé (30) selon la revendication 7, dans lequel la capacité de réserve (15) est chargée lorsque la deuxième réserve d'énergie (20) est complètement chargée.
